# EUROPÄISCHE PATENTSCHRIFT

(11) **EP 1 526 717 B1**
(45) Veröffentlichungstag und Bekanntmachung des Hinweises auf die Patenterteilung: **22.07.2009**
(21) Anmeldenummer: 04104375.3
(22) Anmeldetag: 10.09.2004
(51) Int. Cl.: H04N 5/225, G02B 7/00

(54) **Verfahren und Einrichtung für die Justage eines optischen Moduls, sowie optisches Modul**
Method and device for adjusting an optical module, and optical module
Procédé et dispositif pour régler un module optique et module optique correspondant

(30) Priorität: 21.10.2003 DE 10348777
(43) Veröffentlichungstag der Anmeldung: 27.04.2005
(73) Patentinhaber: ROBERT BOSCH GMBH, 70442 Stuttgart (DE)
(72) Erfinder: Uffenkamp, Volker, 71638 Ludwigsburg (DE); Schick, Jens, 71083 Herrenberg (DE)

(56) Entgegenhaltungen:
- US-A- 5 731 834
- US-B1- 6 628 339
- PATENT ABSTRACTS OF JAPAN Bd. 2003, Nr. 03, 5. Mai 2003 (2003-05-05) & JP 2002 341432 A (MURAKAMI CORP), 27. November 2002 (2002-11-27)

## Beschreibung

### Stand der Technik

Die Erfindung betrifft ein Verfahren und eine Einrichtung für die Justage eines optischen Moduls.

Optische Module der genannten Art werden beispielsweise in Kraftfahrzeuge eingebaut. Als Justage eines optischen Moduls wird die mechanische oder numerische Ausrichtung der optischen Achse des Moduls, bzw. einer in dem Modul angeordneten Kamera in Bezug auf die Fahrbahnebene und die Längsachsenrichtung des Fahrzeugs bzw. dessen Fahrtrichtung bezeichnet.

Aus US 20010006554 A1 ist bekannt, wie eine rückwärts gerichtete Kamera (Parkpilot) an einem Fahrzeug numerisch justiert wird. Dazu wird ein Maßstab, der hinter dem Fahrzeug auf der Fahrbahn ausgelegt ist, mit der Kamera aufgenommen und auf einem Monitor abgebildet. Anhand einer drei Tasten umfassenden Justiereinheit , die mit einer elektrischen Kontrolleinrichtung verbunden ist, wird das von der Kamera erzeugte Bild solange verschoben, bis der abgebildete Maßstab mit einem zusätzlich auf dem Monitor abgebildeten Referenzrahmen übereinstimmt. Die daraus resultierenden Kameraparameter (Nick-, Gier- und Wankwinkel der Kamera) werden in der Kontrolleinrichtung permanent gespeichert und bei dem Einsatz des Systems als Parkpilot numerisch berücksichtigt. Dabei besteht der Nachteil, dass eine Unterteilung der Justage in eine Justage der optischen Achse bezüglich des Gehäuses der Kamera und eine Justage des Kameragehäuses zu dem Fahrzeug nicht möglich ist. Darüber hinaus wird bei der numerischen Justage das Kamerabild in seinem nutzbaren Bildformat verkleinert, wodurch sich Einschränkungen in den Anwendungen ergeben.

### Vorteile der Erfindung

Die Erfindung ermöglicht auf einfache Art und Weise eine getrennte Justage und zwar einerseits eine mechanische Justage des Kameragehäuses zu der optischen Achse, andererseits eine mechanische Justage des Kameragehäuses in Bezug auf das Fahrzeug und weiterhin eine numerische Justage an dem Fahrzeug ohne komplexe Kontrolleinrichtung. Die Justage eines optischen Moduls an einem Fahrzeug sind von zunehmender Bedeutung für die Automobilindustrie, da optische Module mit Videosystemen immer stärker verbreitet werden und die Aufgabe von Fahrerassistenzsystemen übernehmen. Derartige Fahrerassistenzsysteme erfassen und analysieren das Verkehrsgeschehen rund um das eigene Fahrzeug und unterstützen den Fahrer, indem sie ihm beispielsweise verkehrsrelevante Hinweise geben.

Sowohl die optischen Module als auch die Fahrzeuge werden in komplexen Fertigungsabläufen gefertigt. Auch unter optimalen Fertigungsbedingungen entstehen Maßtoleranzen, die zu einer nicht zu vernachlässigenden Abweichung der Richtung der optischen Achse von der konstruktiv geplanten Richtung führt. Eine Justage ist daher unerlässlich, um ein hochwertiges und genau arbeitendes System zu erhalten. Die Kompensation aller Abweichungen in einer Endjustage bei dem Einbau in das Fahrzeug kann zwar im Idealfall Vorteile bieten. In der Praxis zeigt es sich jedoch, dass festgelegte Justagegrenzen infolge allzu großer Toleranzen nicht eingehalten werden können. Abgesehen von den damit verbundenen technischen Problemen, kann dies auch zu vertraglichen und rechtlichen Auseinandersetzungen führen, wenn streitig ist, in wessen Verantwortung die Toleranzüberschreitung liegt. Die Erfindung löst dieses Problem, indem sie einen Weg zur Vermeidung dieser Schwierigkeiten aufzeigt. Sie geht dabei von der Erkenntnis aus, dass eine sinnvolle Aufteilung der Justageschritte besonders zweckmäßig ist. So ist eine Aufteilung in eine modulseitige Justage einerseits und eine fahrzeugseitige Justage andererseits denkbar. Diese Aufteilung ordnet die Verantwortlichkeiten eindeutig zu. Infolge der größeren Flexibilität wird weiterhin der Ausgleich auch größerer Toleranzabweichungen ermöglicht.

### Zeichnung

Ausführungsbeispiele der Erfindung werden nachfolgend unter Bezug auf die Zeichnung näher erläutert. Dabei zeigt
Figur 1 die Darstellung eines Sensorkoordinatensystems,
Figur 2 ein optisches Modul,
Figur 3 eine Graphik zur Erläuterung des Nickwinkels einer Kamera,
Figur 4 eine Graphik zur Erläuterung des Wankwinkels einer Kamera,
Figur 5 eine Graphik zur Erläuterung des Gierwinkels einer Kamera,
Figur 6 eine Darstellung einer schematisch angedeuteten Fräsmaschine für die Bearbeitung eines Kameragehäuses,
Figur 7 eine Justageeinrichtung für die Justage eines Kameragehäuses zu einer Grundplatte,
Figur 8 eine Aufsicht auf die Grundplatte und
Figur 9 eine weitere Justageeinrichtung.

### Beschreibung der Ausführungsbeispiele

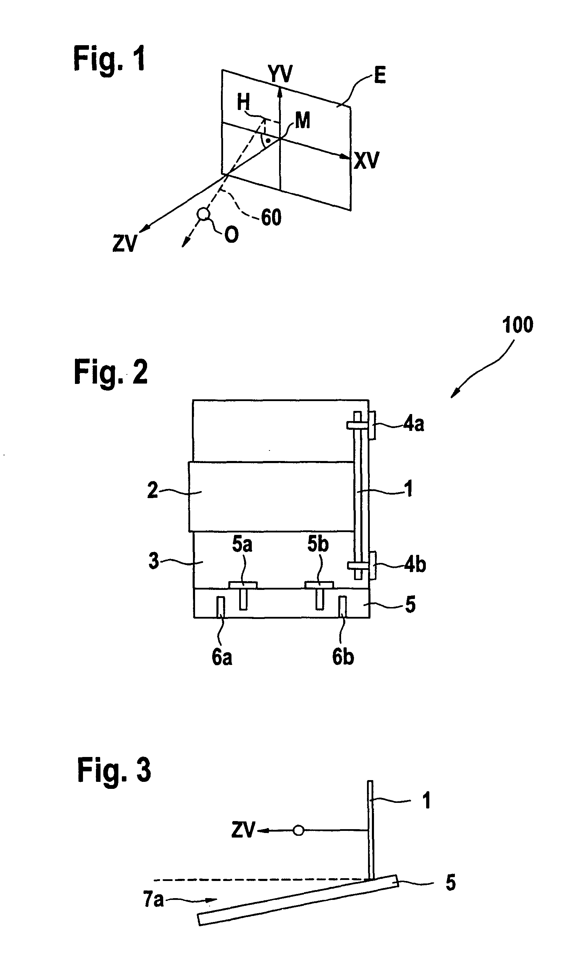

Figur 1 zeigt ein Sensorkoordinatensystem. Das Sensorkoordinatensystem umfasst drei orthogonal aufeinander stehende Achsen XV, YV, ZV. Die von den Achsen XV, YV aufgespannte Ebene bildet die Bildebene E mit dem dort in dem Schnittpunkt der Achsen XV, YV angeordneten Sensormittelpunkt M. Ein Objektiv 2 des optischen Moduls 100 verfügt über eine optische Achse 60, die durch ein Projektionszentrum O verläuft. Die optische Achse 60 des optischen Moduls 100 durchstößt die Bildebene E idealerweise lotrecht in dem Bildhauptpunkt H, der idealerweise auch mit dem Mittelpunkt M des Sensors 1 zusammenfällt. Infolge von Toleranzen bei der Montage des Objektivs 2 in dem optischen Modul ergeben sich jedoch Abweichungen zu dem konstruktiv angestrebten Idealfall. Diese Abweichungen führen dazu, dass der Bildhauptpunkt H nicht mehr notwendigerweise mit dem Mittelpunkt M des Sensors 1 zusammenfällt und dass die Bildebene E eine Neigung zu der optischen Achse 60 aufweist.

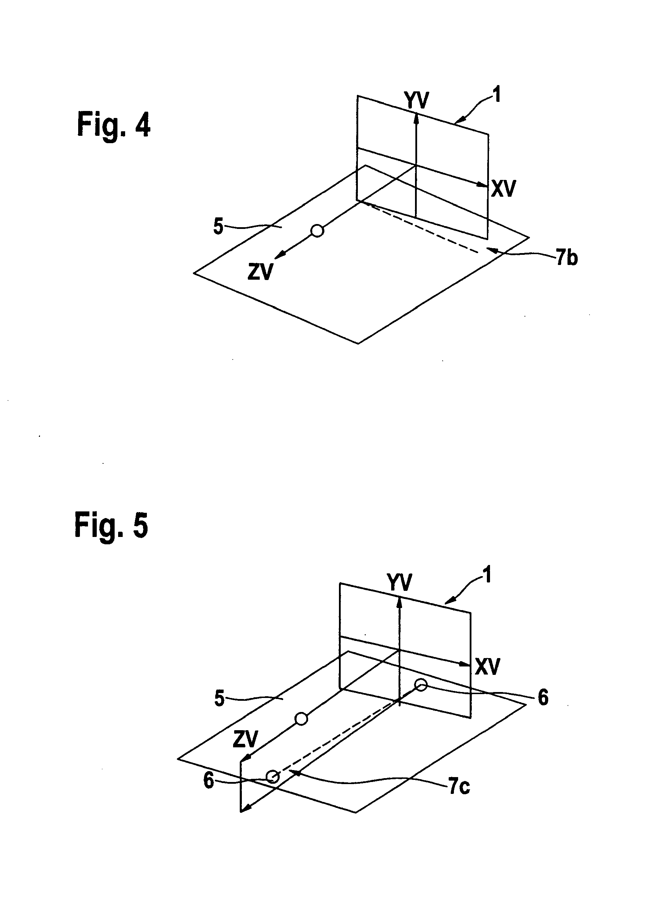

In Figur 2 ist ein optisches Modul 100 dargestellt. Das optische Modul 100 umfasst ein Gehäuse 3, das einen Sensor 1 und ein Objektiv 2 umschließt und diese optischen Komponenten schützt. Das aus dem Sensor 1 und dem Objektiv 2 bestehende Abbildungssystem ist zweckmäßig durch Schrauben 4 mit dem Kameragehäuse 3 verbunden. Das Kameragehäuse 3 seinerseits ist mit einem Montageflansch 5 verbunden und beispielsweise durch eine Schraubverbindung 5a,b auf dem Montageflansch 5 befestigt. Der Montageflansch 5 dient zur Befestigung des optischen Moduls 100 zum Einsatz in einer beliebigen Arbeitsumgebung, zum Beispiel in einem Fahrzeug. Dies wird durch zwei Gewindebohrungen 6 angedeutet. Idealerweise soll der Montageflansch 5 in einer Ebene liegen, die senkrecht auf der Bildebene E steht und parallel zu der Ebene XV-ZV verläuft. Durch die erwähnten mechanischen Verbindungen mit ihren Toleranzen kann es dazu kommen, dass die Richtung der optischen Achse 60 von der konstruktiv geplanten Richtung abweicht. Diese Situation wird im Folgenden anhand von Figur 3, Figur 4 und Figur 5 erläutert. Dabei zeigt Figur 3 eine Graphik zur Erläuterung des Nickwinkels eines optischen Moduls 100. Der Sensor 1 ist in der Bildebene E angeordnet, die sich senkrecht zu der Achse ZV erstreckt. Der Montageflansch 5 erstreckt sich nicht senkrecht zu der Bildebene E, sondern bildet mit dieser Ebene den Nickwinkel 7a. Figur 4 zeigt weiterhin eine Graphik zur Erläuterung des Wankwinkels eines optischen Moduls 100. Die Ebene des Montageflansches 5 ist nicht parallel zu der Ebene XV-ZV ausgerichtet, sondern bildet mit dieser den Wankwinkel 7b. Schließlich zeigt Figur 5 eine Graphik zur Erläuterung des Gierwinkels eines optischen Moduls 100. Die Verbindungslinie der beiden Gewindebohrungen 6 ist nicht parallel zu der Achse ZV ausgerichtet, sondern bildet mit dieser den Gierwinkel 7c.

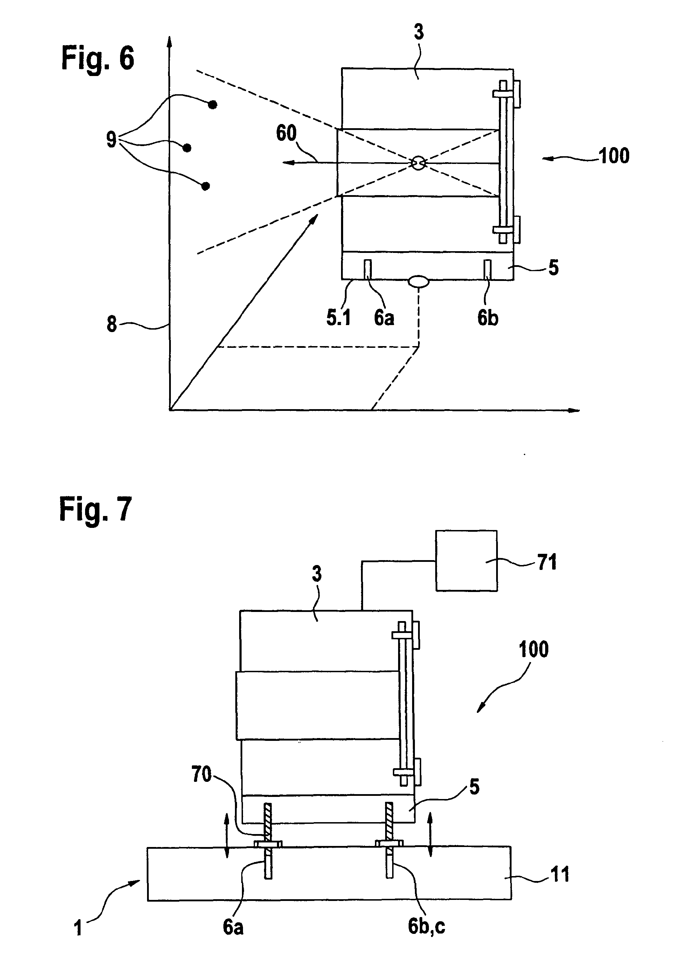

Die Erfindung sieht nun eine Justage vor, dass die tatsächliche Richtung der optischen Achse 60 des optischen Moduls 100 derart auf den Montageflansch 5 übertragen wird, dass bei einer Montage des optischen Moduls 100, beispielsweise bei einem Einbau des optischen Moduls 100 in ein Kraftfahrzeug, die optische Achse 60 des optischen Moduls 100 immer eine bekannte, definierte Richtung aufweist. Die dafür erforderliche Justage wird im Folgenden unter Bezugnahme auf Figur 6 erläutert. Figur 6 zeigt eine schematisch angedeutete Fräsmaschine 8 für die Bearbeitung eines optischen Moduls 100. Das optische Modul 100 wird beliebig in eine wenigstens dreiachsige Fräsmaschine 8 eingespannt. Das optische Modul 100 wird sodann in Betrieb gesetzt und es werden wenigstens drei Referenzpunkte 9 aufgezeichnet. Bei diesen Referenzpunkten 9 kann es sich um geeignete Markierungen, wie beispielsweise Maßstäbe oder Farbpunkte handeln, die lagefest an der Fräsmaschine 8 in dem Aufnahmefeld des optischen Moduls 100 angeordnet sind. Unter der Voraussetzung, dass die Lage der Referenzpunkte 9 in dem Achsensystem der Fräsmaschine 8 bekannt ist, können die Richtung der optischen Achse 60 des optischen Moduls 100 und die Ausrichtung der Bildebene E in dem System der Fräsmaschine 8 numerisch rekonstruiert werden. Der Fräskopf 10 der Fräsmaschine 8 wird dann den berechneten Daten entsprechend derart gesteuert, dass durch eine Fräsbearbeitung des Montageflanschs 5, bzw. der Grundfläche 5.1 des Montageflanschs 5 der Nickwinkel 7a und der Wankwinkel 7b zu Null werden. Bei diesen Justagen wird auch ein möglicher Winkelfehler beseitigt, der aufgrund von Toleranzen bei der Montage des Objektivs entstanden ist. Entsprechend werden die beiden Gewindebohrungen 6 derart gesetzt, dass der Gierwinkel 7c den Wert Null annimmt.

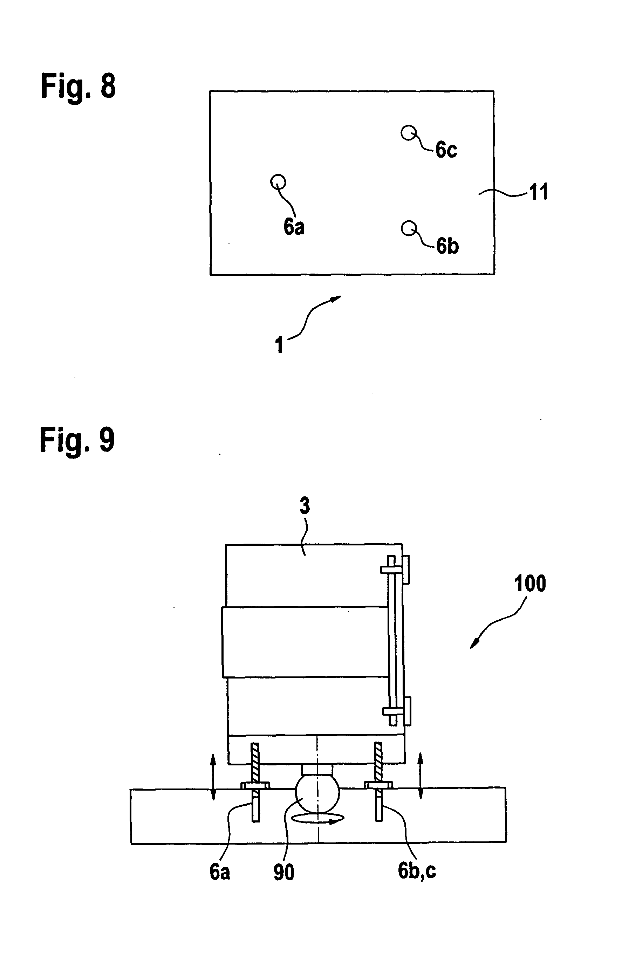

Für eine Montage des optischen Moduls 100 in oder an einem in der Zeichnung nicht dargestellten Fahrzeug wird zweckmäßig eine mit einem Fahrzeug verbundene Grundplatte 11 vorgesehen, auf der das optische Modul 100 angeordnet wird. Da jedoch das Fahrzeug, ebenfalls wie das optische Modul 100, Toleranzen aufweist, ist in der Regel nicht gewährleistet, dass die Normalenvektoren der Grundplatte 11 parallel zu der Längsachse des Fahrzeugs bzw. parallel zu dessen Fahrtrichtung und parallel zu der Fahrbahnebene verlaufen. Die hier ggf. zu beachtende Toleranzkette umfasst Schnittstellen zwischen der Grundplatte 11 und der Windschutzscheibe des Fahrzeugs, die Qualität (Ebenheit) der Windschutzscheibe, die Einbaulage der Windschutzscheibe in Bezug auf die Karosserie und die Ausrichtung der Karosserie des Fahrzeugs in Bezug auf die Fahrbahnoberfläche. Daher ist bei der Endmontage des optischen Moduls 100 in oder an einem Fahrzeug eine weitere Justage erforderlich, um die zuvor erwähnten Toleranzen auszugleichen und eine einwandfreie Ausrichtung der optischen Achse 60 des optischen Moduls 100 zu gewährleisten. Diese Justage wird zweckmäßig in dem Bereich der Verbindungsfläche zwischen dem optischen Modul 100 und der Grundplatte 11 vorgenommen. Dies wird im Folgenden anhand von Figur 7 und Figur 8 erläutert. Figur 7 stellt dabei eine Justageeinrichtung für die Justage eines optischen Moduls 100 in Bezug auf eine insbesondere fahrzeugfeste Grundplatte 11 dar. Figur 8 zeigt eine Aufsicht auf die Grundplatte 11. In die Grundplatte 11 sind drei Gewindebohrungen 6a, 6b, 6c eingebracht, deren Verbindungslinien vorzugsweise ein Dreieck bilden. Zwischen der Grundplatte 11 und dem optischen Modul 100 sind Justageschrauben 70 angeordnet, die in die Gewindebohrungen 6a, 6b, 6c der Grundplatte 11 eingreifen. Ein gleichmäßiges Verdrehen aller drei Justageschrauben 70 führt zu einer Abstandsänderung zwischen dem Kameragehäuse 3 des optischen Moduls 100 und der Grundplatte 11. Wird nur eine Justageschraube 70 oder werden zwei Justageschrauben 70 verdreht, erfährt das optische Modul 100 eine Kippbewegung in Bezug auf die Grundplatte 11. Die Justage wird nun wie folgt durchgeführt. Das optische Modul 100 wird mittels der Justageschrauben 70 mit der Grundplatte 11 verbunden. Das optische Modul 100 wird, analog zu dem ersten Justageteil, der schon oben beschrieben wurde, in Betrieb genommen. Mit dem optischen Modul 100 werden wenigstens drei Referenzpunkte 9 (vergleiche Beschreibung zu Figur 6) aufgenommen, aufgezeichnet und auf einem Monitor 71 dargestellt. Zweckmäßig repräsentieren die Referenzpunkte 9 jetzt die Längsachsenrichtung bzw. die Fahrtrichtung des Fahrzeugs und die Fahrbahnoberfläche. Der erforderliche Justage des optischen Moduls 100 kann nun in Echtzeit durch Verdrehen der Justageschrauben bei gleichzeitiger Beobachtung des Bildes auf dem Monitor 71 erfolgen.

Sofern der Gewindegang der Justageschrauben 70 bekannt ist, kann alternativ auch die Anzahl der für eine optimale Justage erforderlichen Umdrehungen der Justageschrauben 70 aus der von dem optischen Modul 100 gelieferten Bildinformation bestimmt werden. Die Anzahl der Umdrehungen der Justageschrauben 70 wird numerisch bestimmt und in einer Anzeigeeinrichtung dargestellt. Ein Monitor 71 wäre dabei dann nicht erforderlich. Alternativ können die numerisch berechneten Umdrehungen der Justageschrauben über eine entsprechende Diagnoseschnittstelle an einen Montageroboter übermittelt werden, der die erforderliche Justage dann vollautomatisch vornimmt.

Durch die anhand von Figur 7 und Figur 8 erläuterte Dreipunktauflage mittels dreier Justageschrauben 70 ist der Gierwinkel 7c (siehe Figur 5) in nur vergleichsweise geringen Grenzen veränderbar. Eine Ausführungsvariante sieht deshalb ein feststellbares Kugelgelenk 90 für die Befestigung des optischen Moduls 100 auf der Grundplatte 11 vor. Diese Ausführungsvariante ist in Figur 9 dargestellt. Ist mittels des Kugelgelenks 90 die optimale Justage eingestellt, kann das optische Modul 100 wiederum durch Justageschrauben 6a, 6b, 6c fixiert werden. Eine besonders zweckmäßige Justagemöglichkeit ist dann gegeben, wenn die Justageschrauben 6a, 6b, 6c von oben her verdrehbar sind. Dazu sind geeignet angeordnete Bohrungen oder Ausnehmungen in dem Gehäuse 3 des optischen Moduls 100 vorzusehen. Wird auf mechanische Justageschrauben 70 oder auf ein Kugelgelenk 90 verzichtet, dann kann in einer alternativen Variante eine numerische Justage des Bildes durchgeführt werden, indem der verwendete Bildausschnitt in Richtung XV und YV verschoben wird, bzw. der Bildausschnitt bei der Darstellung um die optische Achse verdreht wird. Das numerische Justieren des optischen Moduls anhand einer visuellen Überprüfung der von dem optischen Modul 100 aufgenommenen und auf einem Monitor 71 dargestellten Referenzpunkte 9 erfolgt zweckmäßig durch eine Betätigung eines oder mehrerer der in einem Fahrzeug ohnehin schon vorhandenen Betätigungshebel oder- schalter, denen dazu eine entsprechende Justierfunktion zugeordnet wird. So können beispielsweise die mit einem CAN-Bus verbundenen Hebel oder Schalter für die Betätigung von Blinker, Wischer oder Licht geeignete Steuersignale übertragen, die eine ferngesteuerte Justage des optischen Moduls 100 ermöglichen.

Durch die Aufteilung der Justageschritte ermöglicht die Erfindung die Schaffung eines betriebssicheren und leistungsfähigen optischen Moduls 100 bei klarer Trennung der Verantwortlichkeiten. Der Hersteller des optischen Moduls 100 liefert ein mit einem Montageflansch 5 versehenes Erzeugnis aus, dessen optische Komponenten optimal justiert sind, so dass die optische Achse 60 des optischen Moduls 100 eine definierte vorgebbare Ausrichtung in Bezug auf den Montageflansch 5 aufweist. Der Fahrzeughersteller, bzw. ein Fahrzeugausrüster muss durch die sorgfältige Anbringung der Grundplatte 11 an dem Fahrzeug und durch einen zweiten Justageschritt in Verbindung mit der Endmontage des vorjustierten optischen Moduls 100 an der Grundplatte bzw. an dem Fahrzeug für eine optimale Endjustage des optischen Moduls 100 an dem Fahrzeug sorgen.

### Bezugszeichen

- 1: Sensor
- 2: Objektiv
- 3: Gehäuse
- 4a: Schraube
- 4b: Schraube
- 5: Montageflansch
- 5a: Schraube
- 5b: Schraube
- 5.1: Grundfläche
- 6: Gewindebohrung
- 6a: Gewindebohrung
- 6b: Gewindebohrung
- 6c: Gewindebohrung
- 7a: Nickwinkel
- 7b: Wankwinkel
- 7c: Gierwinkel
- 8: Fräsmaschine
- 9: Referenzpunkt
- 10: Fräskopf
- 11: Grundplatte
- 60: optische Achse
- 70: Justageschrauben
- 71: Monitor
- 90: Kugelgelenk
- 100: optisches Modul
- XV: Achse
- YV: Achse
- ZV: Achse
- E: Bildebene
- H: Bildhauptpunkt
- M: Sensormittelpunkt
- O: Projektionszentrum

## Patentansprüche

1. Verfahren für die Justage eines auf einem Montageflansch (5) befestigbaren optischen Moduls (100) auf einer fahrzeugfest angeordneten Grundplatte (11), **dadurch gekennzeichnet, dass** die Justage zweistufig ausgeführt wird, wobei in einer ersten Justagestufe eine optische Achse (60) des optischen Moduls (100) in Bezug auf den Montageflansch (5) ausgerichtet wird und in einer zweiten Justagestufe das in Bezug auf de Montageflansch ausgerichtete optische Modul (100) in Bezug auf die Längsachse des Fahrzeugs und die Fahrbahnoberfläche ausgerichtet wird, wobei der Montageflansch (5) zur Befestigung des optischen Moduls (100) zum Einsatz in dem Fahrzeug dient.

2. Verfahren nach Anspruch 1, **dadurch gekennzeichnet, dass** das Gehäuse (3) des optischen Moduls (100) auf einem Montageflansch (5) befestigt wird, dass das optische Modul (100) mitsamt dem Montageflansch (5) in eine Bearbeitungsmaschine (Fräsmaschine 8) eingespannt wird, dass das optische Modul (100) auf Referenzpunkte (9) ausgerichtet wird und dass, unter Kontrolle der Lage der von dem optischen Modul (100) aufgenommenen Referenzpunkte (9) die Grundfläche (5.1) des Montageflanschs (5) derart bearbeitet wird, dass die Grundfläche (5.1) des Montageflansches (5) eine vorgebbare Ausrichtung zu der optischen Achse (60) des optischen Moduls (100) annimmt.

3. Verfahren nach einem der vorhergehenden Ansprüche, **dadurch gekennzeichnet, dass** die Grundfläche (5.1) des Montageflansches (5) parallel zu der optischen Achse (60) des optischen Moduls (100) ausgerichtet ist.

4. Verfahren nach einem der vorhergehenden Ansprüche, **dadurch gekennzeichnet, dass** das optische Modul (100) durch eine Dreipunktauflage mit der fahrzeugfest angeordneten Grundplatte (11) verbunden wird, wobei die Dreipunktauflage Justageschrauben (70) umfasst, die zwischen dem Montageflansch (5) des optischen Moduls (100) und der fahrzeugfesten Grundplatte (11) angeordnet sind, und dass die Ausrichtung des optischen Moduls (100) auf die Längsachse des Fahrzeugs und die Fahrbahnoberfläche durch Verstellung der Justageschrauben (70) erfolgt.

5. Verfahren nach einem der vorhergehenden Ansprüche, **dadurch gekennzeichnet, dass** das optische Modul (100) mit einem am Montageflansch (5) angebrachten, feststellbaren Kugelgelenk (90) mit der fahrzeugfest angeordneten Grundplatte (11) verbunden wird, und dass die Ausrichtung des optischen Moduls (100) auf die Längsachse des Fahrzeugs und die Fahrbahnoberfläche durch Verstellung des Kugelgelenks (90) erfolgt.

6. Verfahren nach einem der vorhergehenden Ansprüche, **dadurch gekennzeichnet, dass** die Justage des optischen Moduls (100) auf die Längsachse des Fahrzeugs und die Fahrbahnoberfläche unter Sichtkontrolle von Referenzpunkten (9) erfolgt, die während des Justagevorgangs von dem optischen Modul (100) aufgenommen und auf einem Monitor (71) dargestellt werden.

7. Verfahren nach einem der vorhergehenden Ansprüche, **dadurch gekennzeichnet, dass** die Justage des optischen Moduls (100) auf die Längsachse des Fahrzeugs und die Fahrbahnoberfläche von einem Montageroboter durchgeführt wird.

8. System bestehend aus einem optischen Modul und einer Einrichtung zur Justage desselben, wobei die Einrichtung für die Justage eines optischen Moduls (100) in Bezug auf einen Montageflansch (5), umfassend das optische Modul (100), ein Gehäuse (3) des optischen Moduls (100) und den mit dem Gehäuse (3) des optischen Moduls (100) verbundenen Montageflansch (5), wobei das optische Modul (100) von dem Gehäuse (3) eingeschlossen ist und wobei das optische Modul (100) optische Komponenten (1,2) aufweist, **dadurch gekennzeichnet, dass** die Einrichtung von dem optischen Modul (100) aufnehmbare Referenzpunkte (9) sowie Bearbeitungsmittel (8) aufweist, wobei die Bearbeitungsmittel geeignet sind, den Montageflansch (5) unter Lagekontrolle der Referenzpunkte (9) derart zu bearbeiten, dass die optische Achse (60) des optischen Moduls (100) eine vorgebbare Ausrichtung zu der Grundfläche (5.1) des Montageflansches (5) einnimmt.

9. System bestehend aus einem optischen Modul und einer Einrichtung zur Justage desselben, wobei die Einrichtung für die Justage eines optischen Moduls (100) in Bezug auf die Längsachse eines Fahrzeugs und einer Fahrbahnoberfläche, umfassend das optische Modul (100), ein Gehäuse (3), einen Montageflansch (5) und eine fahrzeugfest angeordnete Grundplatte (11), wobei das optische Modul (100) von dem Gehäuse (3) eingeschlossen ist, wobei das optische Modul (100) optische Komponenten (1,2) aufweist und wobei das optische Modul (100) mit dem Montageflansch (5) und der fahrzeugfest angeordneten Grundplatte (11) verbunden ist, **dadurch gekennzeichnet, dass** die optische Achse des optischen Moduls eine definierte Ausrichtung in Bezug auf den Montageflansch (5) aufweist, und dass die Einrichtung von dem optischen Modul (100) aufnehmbare Referenzpunkte (9) sowie Stellmittel (70) aufweist, wobei die Stellmittel (70) geeignet sind, das optische Modul (100) unter Lagekontrolle der Referenzpunkte (9) derart zu verstellen, dass eine optische Achse (60) des optischen Moduls (100) eine vorgebbare Ausrichtung zu der Längsachse des Fahrzeugs und die Fahrbahnoberfläche einnimmt.

## Claims

1. Method for adjusting an optical module (100), which can be attached to a mounting flange (5), on a base plate (11) which is arranged fixed to the vehicle, **characterized in that** the adjustment is carried out in two stages, wherein in a first adjustment stage an optical axis (60) of the optical module (100) is aligned with the mounting flange (5), and in a second adjustment stage the optical module (100) which is aligned with the mounting flange is aligned with the longitudinal axis of the vehicle and the surface of the carriageway, wherein the mounting flange (5) serves to attach the optical module (100) for use in the vehicle.

2. Method according to Claim 1, **characterized in that** the housing (3) of the optical module (100) is attached to a mounting flange (5), **in that** the optical module (100) together with the mounting flange (5) is clamped into a processing machine (milling machine 8), **in that** the optical module (100) is aligned with reference points (9), and **in that**, while monitoring the position of the reference points (9) recorded by the optical module (100), the base surface (5.1) of the mounting flange (5) is processed in such a way that the base surface (5.1) of the mounting flange (5) assumes a predefinable orientation with respect to the optical axis (60) of the optical module (100).

3. Method according to one of the preceding claims, **characterized in that** the base surface (5.1) of the mounting flange (5) is oriented parallel to the optical axis (60) of the optical module (100).

4. Method according to one of the preceding claims, **characterized in that** the optical module (100) is connected by means of a three-point support to the base plate (11) which is arranged fixed to the vehicle, wherein the three-point support comprises adjustment screws (70) which are arranged between the mounting flange (5) of the optical module (100) and the base plate (11) which is fixed to the vehicle, and **in that** the optical module (100) is aligned with the longitudinal axis of the vehicle and the surface of the carriageway by adjusting the adjustment screws (70).

5. Method according to one of the preceding claims, **characterized in that** the optical module (100) is connected to the base plate (11), which is arranged fixed to the vehicle, by means of a ball-and-socket joint (90) which is attached to the mounting flange (5) and can be locked, and **in that** the optical module (100) is aligned with the longitudinal axis of the vehicle and the surface of the carriageway by adjusting the ball-and-socket joint (90).

6. Method according to one of the preceding claims, **characterized in that** the optical module (100) is adjusted to the longitudinal axis of the vehicle and the surface of the carriageway with visual monitoring of reference points (9) which are recorded by the optical module (100) during the adjustment process and displayed on a monitor (71).

7. Method according to one of the preceding claims, **characterized in that** the adjustment of the optical module (100) to the longitudinal axis of the vehicle and the surface of the carriageways carried out by a mounting of robot.

8. System composed of an optical module and a device for adjusting same, wherein the device for adjusting an optical module (100) with respect to a mounting flange (5) comprises the optical module (100), a housing (3) of the optical module (100) and the mounting flange (5) which is connected to the housing (3) of the optical module (100), wherein the optical module (100) is enclosed by the housing (3), and wherein the optical module (100) has optical components (1, 2), **characterized in that** the device has reference points (9), which can be recorded by the optical module (100), and processing means (8), wherein the processing means are suitable for processing the mounting flange (5) while monitoring the position of the reference points (9), in such a way that the optical axis (60) of the optical module (100) assumes a predefinable orientation with the base surface (5.1) of the mounting flange (5).

9. System composed of an optical module and a device for adjusting same, wherein the device for adjusting an optical module (100) with respect to the longitudinal axis of a vehicle and a surface of a carriageway comprises the optical module (100), a housing (3), a mounting flange (5) and a base plate (11) which is arranged fixed to the vehicle, wherein the optical module (100) is enclosed by the housing (3), wherein the optical module (100) has optical components (1, 2), and wherein the optical module (100) is connected to the mounting flange (5) and to the base plate (11) which is arranged fixed to the vehicle, **characterized in that** the optical axis of the optical module has a defined orientation with respect to the mounting flange (5), and **in that** the device has reference points (9) which can be recorded by the optical module (100), and actuator means (70), wherein the actuator means (70) are suitable for adjusting the optical module (100) while monitoring the position of the reference points (9) in such a way that an optical axis (60) of the optical module (100) assumes a predefinable orientation with respect to the longitudinal axis of the vehicle and the surface of the carriageway.

## Revendications

1. Procédé d'ajustage sur une plaque de base (11) fixée à demeure sur un véhicule d'un module optique (100) pouvant être fixé sur une bride de montage (5), **caractérisé en ce que** l'ajustage est effectué en deux étapes, une première étape de l'ajustage consistant à aligner un axe optique (60) du module optique (100) par rapport à la bride de montage (5) et une deuxième étape d'ajustage consistant à aligner le module optique (100), aligné par rapport à la bride de montage, par rapport à l'axe longitudinal du véhicule et à la surface de la chaussée, la bride de montage (5) servant à la fixation du module optique (100) en vue de son utilisation dans le véhicule.

2. Procédé selon la revendication 1, **caractérisé en ce que** le boîtier (3) du module optique (100) est fixé sur une bride de montage (5), que le module optique (100) conjointement avec la bride de montage (5) est monté dans une machine d'usinage (fraiseuse 8), que le module optique (100) est aligné sur des points de référence (9) et que la surface de base (5.1) de la bride de montage (5) est usinée en contrôlant la position des points de référence (9) relevés par le module optique (100) de telle sorte que la surface de base (5.1) de la bride de montage (5) adopte un alignement pouvant être prédéfini par rapport à l'axe optique (60) du module optique (100).

3. Procédé selon l'une des revendications précédentes, **caractérisé en ce que** la surface de base (5.1) de la bride de montage (5) est alignée parallèlement à l'axe optique (60) du module optique (100).

4. Procédé selon l'une des revendications précédentes, **caractérisé en ce que** le module optique (100) est relié à la plaque de base (11) fixée à demeure sur le véhicule par le biais d'un support à trois points, le support à trois points comprenant des vis d'ajustage (70) qui sont disposées entre la bride de montage (5) du module optique (100) et la plaque de base (11) fixe du véhicule et que l'alignement du module optique (100) sur l'axe longitudinal du véhicule et sur la surface de la chaussée est réalisé en réglant les vis d'ajustage (70).

5. Procédé selon l'une des revendications précédentes, **caractérisé en ce que** le module optique (100) est relié avec la plaque de base (11) fixée à demeure sur le véhicule au moyen d'une rotule (90) blocable montée sur la bride de montage (5) et que l'alignement du module optique (100) sur l'axe longitudinal du véhicule et sur la surface de la chaussée est réalisé en réglant la rotule (90).

6. Procédé selon l'une des revendications précédentes, **caractérisé en ce que** l'ajustage du module optique (100) sur l'axe longitudinal du véhicule et sur la surface de la chaussée est réalisé en contrôlant visuellement des points de référence (9) qui sont relevés par le module optique (100) pendant l'opération d'ajustage et représentés sur un moniteur (71).

7. Procédé selon l'une des revendications précédentes, **caractérisé en ce que** l'ajustage du module optique (100) sur l'axe longitudinal du véhicule et sur la surface de la chaussée est réalisé par un robot de montage.

8. Système composé d'un module optique et d'un dispositif d'ajustage de celui-ci, le dispositif servant à l'ajustage d'un module optique (100) par rapport à une bride de montage (5), comprenant le module optique (100), un boîtier (3) du module optique (100) et la bride de montage (5) reliée avec le boîtier (3) du module optique (100), le module optique (100) étant enfermé dans le boîtier (3) et le module optique (100) présentant des composants optiques (1, 2), **caractérisé en ce que** le dispositif présente des points de référence (9) pouvant être relevés par le module optique (100) ainsi que des moyens d'usinage (8), les moyens d'usinage étant conçus pour usiner la bride de montage (5) en contrôlant la position des points de référence (9) de telle sorte que l'axe optique (60) du module optique (100) adopte un alignement pouvant être prédéfini par rapport à la surface de base (5.1) de la bride de montage (5).

9. Système composé d'un module optique et d'un dispositif d'ajustage de celui-ci, le dispositif servant à l'ajustage d'un module optique (100) par rapport à l'axe longitudinal d'un véhicule et à la surface d'une chaussée, comprenant le module optique (100), un boîtier (3), une bride de montage (5) et une plaque de base (11) fixée à demeure sur le véhicule, le module optique (100) étant enfermé dans le boîtier (3), le module optique (100) présentant des composants optiques (1, 2) et le module optique (100) étant relié avec la bride de montage (5) et la plaque de base (11) fixée à demeure sur le véhicule, **caractérisé en ce que** l'axe optique du module optique présente un alignement défini par rapport à la bride de montage (5) et que le dispositif présente des points de référence (9) pouvant être relevés par le module optique (100) ainsi que des moyens de réglage (70), les moyens de réglage (70) étant conçus pour positionner le module optique (100) en contrôlant la position des points de référence (9) de telle sorte qu'un axe optique (60) du module optique (100) adopte un alignement pouvant être prédéfini par rapport à l'axe longitudinal du véhicule et à la surface de la chaussée.
